(19) Europäisches Patentamt

European Patent Office

Office européen des brevets

(11) **EP 1 212 857 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(21) Anmeldenummer: **00969432.4**

(22) Anmeldetag: **05.10.2000**

(51) Int Cl.⁷: **H04H 1/00**, H04B 1/66

(86) Internationale Anmeldenummer:
**PCT/EP00/09771**

(87) Internationale Veröffentlichungsnummer:
**WO 01/026262 (12.04.2001 Gazette 2001/15)**

(54) **VERFAHREN UND VORRICHTUNG ZUM EINBRINGEN VON INFORMATIONEN IN EINEN DATENSTROM SOWIE VERFAHREN UND VORRICHTUNG ZUM CODIEREN EINES AUDIOSIGNALS**

METHOD AND DEVICE FOR INTRODUCING INFORMATION INTO A DATA STREAM AND A METHOD FOR ENCODING AN AUDIO SIGNAL

PROCEDE ET DISPOSITIF POUR L'INTRODUCTION D'INFORMATIONS DANS UN FLUX DE DONNEES, AINSI QUE PROCEDE ET DISPOSITIF POUR LE CODAGE D'UN SIGNAL AUDIO

(84) Benannte Vertragsstaaten:
**AT CH DE FR GB IE LI**

(30) Priorität: **05.10.1999 DE 19947877**

(43) Veröffentlichungstag der Anmeldung:
**12.06.2002 Patentblatt 2002/24**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **NEUBAUER, Christian**
  **90411 Nürnberg (DE)**
• **HERRE, Jürgen**
  **91054 Buckenhof (DE)**
• **BRANDENBURG, Karlheinz**
  **91054 Erlangen (DE)**
• **ALLAMANCHE, Eric**
  **90425 Nürnberg (DE)**

(74) Vertreter: **Schoppe, Fritz, Dipl.-Ing. et al**
**Patentanwälte Schoppe, Zimmermann, Stöckeler & Zinkler,**
**Postfach 71 08 67**
**81458 München (DE)**

(56) Entgegenhaltungen:
EP-A- 0 446 037          DE-A- 19 640 825
US-A- 5 319 735          US-A- 5 687 191

• JOHNSTON J D: "TRANSFORM CODING OF AUDIO SIGNALS USING PERCEPTUAL NOISE CRITERIA" IEEE JOURNAL ON SELECTED AREAS IN COMMUNICATIONS,US,IEEE INC. NEW YORK, Bd. 6, Nr. 2, 1. Februar 1988 (1988-02-01), Seiten 314-323, XP002003779 ISSN: 0733-8716
• KATE W R TH TEN ET AL: "DIGITAL AUDIO CARRYING EXTRA INFORMATION" INTERNATIONAL CONFERENCE ON ACOUSTICS, SPEECH & SIGNAL PROCESSING. ICASSP,US,NEW YORK, IEEE, Bd. CONF. 15, 3. April 1990 (1990-04-03), Seiten 1097-1100, XP000146962

## Beschreibung

Die vorliegende Erfindung bezieht sich allgemein auf Audiosignale und insbesondere auf das Einbringen von Informationen in einen Datenstrom, der Spektralwerte aufweist, die ein Kurzzeitspektrum eines Audiosignals darstellen. Insbesondere auf dem Gebiet der Urheberrechtsschutzes für Audiosignale dient die vorliegende Erfindung dazu, beispielsweise Urheberrechtsinformationen in ein Audiosignal möglichst unhörbar einzubringen.

Mit zunehmender Verbreitung des Internets hat auch die Musikpiraterie drastisch zugenommen. An vielen Stellen im Internet können Musikstücke bzw. allgemein Audiosignale heruntergeladen werden. In den allerwenigsten Fällen werden hierbei Urheberrechte beachtet. Insbesondere wird sehr selten die Erlaubnis des Urhebers eingeholt, sein Werk zur Verfügung zu stellen. Noch seltener werden Gebühren an den Urheber bezahlt, die der Preis für ein rechtmäßiges Kopieren sind. Darüberhinaus findet ein unkontrolliertes Kopieren von Werken statt, was in den allermeisten Fällen ebenfalls ohne Berücksichtigung von Urheberrechten geschieht.

Wenn Musikstücke über das Internet von einem Provider für Musikstücke rechtmäßig erworben werden, erzeugt der Provider üblicherweise einen Header, in dem Copyright-Informationen sowie beispielsweise eine Kundennummer eingebracht sind, wobei die Kundennummer eindeutig auf den aktuell vorliegenden Käufer hinweist. Es ist ferner bekannt, Kopiererlaubnisinformationen in diesen Header einzufügen, welche die verschiedensten Arten von Kopierrechten signalisieren, wie z. B. daß das Kopieren des aktuellen Stücks vollständig untersagt ist, daß das Kopieren des aktuellen Stücks nur ein einziges Mal erlaubt ist, daß das Kopieren des aktuellen Stücks völlig frei ist, etc.

Der Kunde verfügt über einen Decodierer, der den Header einliest und unter Beachtung der erlaubten Handlungen beispielsweise nur eine einzige Kopie zuläßt und weitere Kopien verweigert.

Dieses Konzept zur Beachtung der Urheberrechte funktioniert jedoch nur für Kunden, die sich legal verhalten.

Illegale Kunden haben üblicherweise ein wesentliches Potential an Kreativität, um mit einem Header versehene Musikstücke zu "knacken". Hier zeigt sich bereits der Nachteil der beschriebenen Vorgehensweise zum Schutz von Urheberrechten. Ein solcher Header kann einfach entfernt werden. Alternativ könnte ein illegaler Benutzer auch einzelne Einträge in dem Header modifizieren, um beispielsweise aus dem Eintrag "Kopieren untersagt" einen Eintrag "Kopieren völlig frei" zu machen. Denkbar ist auch der Fall, daß ein illegaler Kunde seine eigene Kundennummer aus dem Header entfernt und dann das Musikstück auf seiner oder einer anderen Homepage im Internet anbietet. Ab diesem Moment ist es nicht mehr möglich, den illegalen Kunden zu ermitteln, da er seine Kundennummer entfernt hat. Versuche, solche Verletzungen des Urheberrechts zu unterbinden, werden daher zwangsläufig ins Leere laufen, da die Kopierinformationen aus dem Musikstück entfernt worden sind bzw. modifiziert worden sind, und da der illegale Kunde, der dies tat, nicht mehr ermittelt werden kann, um ihn zur Verantwortung zu ziehen. Wäre stattdessen eine sichere Einbringung von Informationen in das Audiosignal vorhanden, so könnten staatliche Behörden, die Urheberrechtsverletzungen verfolgen, verdächtige Musikstücke im Internet ermitteln und beispielsweise die Benutzeridentifikation solcher illegalen Stücke feststellen, um den illegalen Benutzern das Handwerk zu legen.

Aus der WO 97/33391 ist ein Codierverfahren zur Einbringung eines nicht hörbaren Datensignals in ein Audiosignal bekannt. Dabei wird das Audiosignal, in das das nicht hörbare Datensignal eingebracht werden soll, in den Frequenzbereich umgewandelt, um mittels eines psychoakustischen Modells die Maskierungsschwelle des Audiosignals zu bestimmen. Das Datensignal, das in das Audiosignal eingebracht werden soll, wird mit einem Pseudorauschsignal multipliziert, um ein frequenzmäßig gespreiztes Datensignal zu schaffen. Das frequenzmäßig gespreizte Datensignal wird dann mit der psychoakustischen Maskierungsschwelle gewichtet, derart, daß die Energie des frequenzmäßig gespreizten Datensignals immer unterhalb der Maskierungsschwelle liegt. Schließlich wird das gewichtete Datensignal dem Audiosignal überlagert, wodurch ein Audiosignal erzeugt wird, in das das Datensignal unhörbar eingebracht ist. Das Datensignal kann zum einen dazu verwendet werden, die Reichweite eines Senders zu ermitteln. Alternativ kann das Datensignal zur Kennzeichnung von Audiosignalen verwendet werden, um eventuelle Raubkopien ohne weiteres zu identifizieren, da jeder Tonträger beispielsweise in Form einer CompactDisc ab Werk mit einer individuellen Kennung versehen wird. Weitere beschriebene Anwendungsmöglichkeiten des Datensignals bestehen im Fernsteuern von Audiogeräten in Analogie zum "VPS"-Verfahren beim Fernsehen.

Dieses Verfahren liefert bereits eine hohe Sicherheit gegenüber Musikpiraten, da sie zum einen unter Umständen gar nicht wissen, daß das Musikstück, das sie gerade vervielfältigen, gekennzeichnet ist. Darüberhinaus ist es nahezu unmöglich, ohne einen autorisierten Decodierer das Datensignal, das unhörbar in dem Audiosignal vorhanden ist, zu extrahieren.

Audiosignale liegen, wenn sie von einer CompactDisc stammen, als 16-Bit-PCM-Abtastwerte vor. Ein Musikpirat könnte beispielsweise die Abtastrate bzw. die Pegel oder Phasen der Abtastwerte manipulieren, um das Datensignal unlesbar, d. h. undecodierbar zu machen, wodurch die Urheberrechtsinformationen ebenfalls aus dem Audiosignal entfernt wären. Dies wird jedoch nicht ohne signifikante Qualitätseinbußen möglich sein. Solchermaßen in Audiosignale eingebrachte Daten können daher auch in Analogie zu Banknoten als "Wasserzeichen" bezeichnet werden.

Das in der WO 97/33391 beschriebene Verfahren zur Einbringung eines nicht hörbaren Datensignals in ein Audiosignal arbeitet unter Verwendung der Audioabtastwerte, die als Zeitbereichs-Abtastwerte vorliegen. Dies macht es erforderlich, daß Audiostücke, d. h. Musikstücke, Hörspiele und ähnliches, als Folge von zeitlichen Abtastwerten vorliegen müssen, um mit einem Wasserzeichen versehen zu werden. Dies hat den Nachteil, daß dieses Verfahren nicht für bereits komprimierte Datenströme, die beispielsweise einer Verarbeitung nach einem der MPEG-Verfahren unterzogen worden sind, eingesetzt werden kann. Dies bedeutet, daß ein Anbieter von Musikstücken, der die Musikstücke vor der Auslieferung an den Kunden mit einem Wasserzeichen versehen möchte, die Musikstücke als Folge von PCM-Abtastwerten speichern muß. Dies führt dazu, daß ein Anbieter für Musikstücke eine überaus große Speicherkapazität zur Verfügung haben muß. Es wäre jedoch wünschenswert, die äußerst effektiven Audiokomprimierungsverfahren bereits zum Speichern der Audiodaten bei dem Anbieter einzusetzen.

Selbstverständlich könnte ein Anbieter für Audiodaten der oben beschriebenen Art einfach hergehen, sämtliche Musikstücke beispielsweise unter Verwendung des Standards MPEG-2 AAC 13818-7 komprimieren und dann, bevor das Audiostück mit einem Wasserzeichen versehen werden soll, wieder vollständig dekomprimieren, um wieder eine Folge von Audio-Abtastwerten ("Samples") zu haben, die dann in eine bekannte Vorrichtung zum Einbringen eines nicht hörbaren Datensignals eingespeist werden, um ein Wasserzeichen einzubringen. Dies bringt jedoch einen wesentlichen Aufwand dahingehend mit sich, daß vor dem Einbringen der Informationen in das Audiosignal eine vollständige Dekomprimierung bzw. Decodierung erforderlich ist. Eine solche Decodierung kostet Zeit und Geld. Wesentlich gravierender ist jedoch die Tatsache, daß bei einer solchen Vorgehensweise Tandem-Codiereffekte auftreten.

Ein weiterer Nachteil dieser Vorgehensweise besteht darin, daß aufgrund der Tatsache, daß das Wasserzeichen in die PCM-Daten eingebracht wird, keine Sicherheit darüber gegeben ist, ob das Wasserzeichen nach einer Audio-Komprimierung noch vorhanden ist. Wenn mit Wasserzeichen versehene PCM-Daten mit relativ niedriger Bitrate codiert werden, führt der Codierer beim Quantisieren aufgrund der relativ niedrigen Bitrate viel Quantisierungsrauschen ein, das im extremen Fall dazu führen wird, daß kein Wasserzeichen mehr decodiert werden kann. Problematisch ist also, daß bei dieser Vorgehensweise die Bitrate des Audiocodierers, der die mit Wasserzeichen versehenen PCM-Daten codiert, nicht von vorneherein bekannt ist, weshalb keine sichere Steuerung des Verhältnisses zwischen Wasserzeichenenergie und Störenergie aufgrund des Quantisierungsrauschens möglich ist.

Es ist bekannt, daß Audio-Codierverfahren nach einem der MPEG-Standards keine verlustlosen Codierverfahren, sondern verlustbehaftete Codierverfahren sind. Biteinsparungen im Vergleich zur direkten Übertragung von Audio-Abtastwerten im Zeitbereich werden zu einem Großteil dadurch erreicht, daß psychoakustische Maskierungseffekte ausgenutzt werden. Insbesondere wird für einen Block von beispielsweise 2048 Audio-Abtastwerten die psychoakustische Maskierungsschwelle als Funktion der Frequenz ermittelt, woraufhin nach einer Zeit-Frequenz-Transformation der Audio-Abtastwerte die Quantisierung der Spektralwerte, die das Kurzzeitspektrum enthält, unter Berücksichtigung dieser psychoakustischen Maskierungsschwelle durchgeführt wird. Anders ausgedrückt wird die Quantisierer-Schrittweite so gesteuert, daß die durch das Quantisieren eingefügte Störenergie kleiner oder gleich der psychoakustischen Maskierungsschwelle ist. In Bereichen des Audiosignals, in denen das Verdeckungsmaß, d. h. das Verhältnis der Audiosignalenergie und der psychoakustischen Maskierungsschwelle, sehr klein ist, wie z. B. in sehr rauschhaften Bereichen des Audiosignals, müssen die Spektralwerte lediglich grob quantisiert werden, ohne daß es nach einem anschließenden Decodieren zu hörbaren Störungen kommt. In anderen Bereichen, in denen das Audiosignal sehr tonal ist, muß feiner quantisiert werden, derart, daß eine relativ kleine Störenergie aufgrund des Quantisierens entsteht, da das Verdeckungsmaß hier sehr groß ist.

Aus dem Vorstehenden wird deutlich, daß aufgrund der Quantisierungsvorgehensweise Informationen des ursprünglichen Audiosignals verloren gehen. Dies spielt noch keine Rolle, wenn das quantisierte Audiosignal wieder decodiert wird, da die Störenergie aufgrund des Quantisierens so verteilt wurde, daß sie unter der psychoakustischen Maskierungsschwelle bleibt und somit, wenn ein ideales psychoakustisches Modell verwendet wurde, unhörbar sein wird. Diese Betrachtungen gelten jedoch immer nur für ein bestimmtes Kurzzeitspektrum bzw. für einen Block von z. B. 2.048 aufeinanderfolgenden Audio-Abtastwerten. Nach der Decodierung enthält der Block von Audio-Abtastwerten jedoch keine Informationen mehr darüber, wie die Blockbildung durchgeführt wurde. Wenn die bekannte Vorrichtung zum Einbringen von Informationen verwendet wird, die in den allermeisten Fällen eine bestimmte Verzögerung im Vergleich zu einem Audio-Codierer, der keine Informationen einbringt, hat, kann nicht davon ausgegangen werden, daß rein zufällig die gleiche Blockeinteilung stattfindet. Stattdessen werden die Blockeinteilung, die Kurzzeit-Spektrum-Bildung und die Quantisierung in einem völlig anderen Blockraster stattfinden. Eine erneute Decodierung wird dann üblicherweise zu deutlich hörbaren Störungen führen, da sie sich nicht auf das gleiche Kurzzeitspektrum sondern auf unterschiedliche Kurzzeitspektren bezieht. Dieses Auftreten von hörbaren Störungen durch zwei Codierer/Decodierer-Stufen aufgrund ihrer unterschiedlichen Einteilung des Stroms von Audio-Abtastwerten in Blöcke wird als Tandem-Codiereffekt bezeichnet.

Es sei hier darauf hingewiesen, daß im allgemeinen Fall durch das Einbringen des nicht-hörbaren Datensignals Störenergie in das Audiosignal eingeführt wird, das ohnehin schon Störenergie aufgrund des nicht unendlich feinen Quantisierungsverfahrens hat. Das Einbringen des nicht-hörbaren Datensignals führt damit tendenziell zu einer Verschlechterung der Audioqualität, es sei denn, daß besondere Vorkehrungen unternommen werden. In diesem Zusammenhang ist eine zusätzliche Einführung von Störenergie aufgrund der Tandem-Codiereffekte, die vorstehend ausgeführt wurden, umso weniger wünschenswert, da dieser Qualitätsverlust einfach systembedingt ohne Nutzen auftritt, während kleine Qualitätsverschlechterungen aufgrund des Wasserzeichens eher in Kauf genommen werden, da das Wasserzeichen einen Nutzen mit sich bringt. Tandem-Codiereffekte bringen jedoch nur Störungen, aber überhaupt keinen Nutzen mit sich.

Das U.S.-Patent Nr. 5,687,191 offenbart ein Konzept zum Übertragen von versteckten Daten nach einer Datenkompression. Ein Audiosignal wird mittels eines. Subband-Codierers in Subband-Abtastwerte umgesetzt, wobei jedes Subband-Filter eine Folge von zeitlichen Abtastwerten erzeugt, deren spektrale Bandbreite gleich der Bandbreite des entsprechenden Subband-Filters ist. Ein Datenstrom mit solchen quantisierten Subband-Abtastwerten wird aufgepackt und demultiplext, um eine inverse Quantisierung durchzuführen, derart, daß wieder Subband-Abtastwerte vorliegen. Ferner wird eine Pseudo-Noise-Spreizsequenz mittels einer Subband-Filterbank gefiltert, um für jeden Filter der Subband-Filterbank eine Folge von zeitlichen Subband-Abtastwerten zu erhalten, die eine Bandbreite haben, die durch das entsprechende Subband-Filter bestimmt ist. Die zu transportierenden Daten werden einer Vorwärtsfehlerkorrektur unterzogen und einer Leistungssteuerung unterzogen, die sicherstellt, daß das Hilfsdatensignal unter dem Rauschquantisierungsboden der Audio-Subbandabtastwerte ist. Die derart bearbeiteten Hilfsdatenabtastwerte werden mit entsprechenden Subband-Abtastwerten der Pseudo-Noise-Spreizsequenz mittels jeweiligen Modulatoren verbunden und dann mit den aufgepackten Subband-Abtastwerten des Audiosignals mittels XOR-Gatter verknüpft. Die so erhaltenen kombinierten Subband-Abtastwerte werden dann wieder quantisiert und verpackt, um einen Ausgangs-Datenstrom zu erhalten.

Die Aufgabe der vorliegenden Erfindung besteht darin, ein Konzept zu schaffen, das es ermöglicht, Audiostücke mit einem Wasserzeichen zu versehen, während die Auswirkungen des Wasserzeichens auf die Audioqualität möglichst gering sein sollen.

Diese Aufgabe wird durch ein Verfahren zum Einbringen von Informationen in einen Datenstrom nach Patentanspruch 1, durch ein Verfahren zum Codieren eines Audiosignals nach Patentanspruch 11, durch eine Vorrichtung zum Einbringen von Informationen nach Patentanspruch 13 und durch eine Vorrichtung zum Codieren eines Audiosignals nach Patentanspruch 14 gelöst.

Der vorliegenden Erfindung liegt die Erkenntnis zugrunde, daß davon abgegangen werden muß, vor dem Einbringen des Wasserzeichens eine vollständige Decodierung durchzuführen. Stattdessen wird erfindungsgemäß ein Datenstrom, der Spektralwerte aufweist, die ein Kurzzeitspektrum eines Audiosignals darstellen, lediglich teilweise "entpackt", bis die Spektralwerte vorliegen. Die Entpackung ist jedoch keine vollständige Decodierung sondern lediglich eine teilweise Decodierung, bei der die Informationen über die Blockbildung bzw. das im ursprünglichen Codierer eingesetzte Blockraster nicht angetastet werden.

Dies wird dadurch erreicht, daß das erfindungsgemäße Verfahren mit Spektralwerten und nicht mit zeitlichen Abtastwerten (Samples) durchgeführt wird. Die Informationen, die in das Audiosignal eingebracht werden sollen, werden im Sinne eines Spread-Spectrum-Modulation mit einer Spreizsequenz beaufschlagt, um ein gespreiztes Informationssignal zu erhalten. Anschließend wird eine spektrale Darstellung des gespreizten Informationssignals beispielsweise durch eine Filterbank, eine FFT, einer MDCT oder ähnliches erzeugt, um ein spektrales gespreiztes Informationssignal zu erhalten. Nun wird eine psychoakustisch maskierbare Störung als Funktion der Frequenz für das Kurzzeitspektrum des Audiosignals ermittelt, um dann das spektrale gespreizte Informationssignal unter Verwendung der ermittelten Störenergie zu gewichten, so daß ein gewichtetes Informationssignal erzeugt werden kann, dessen Energie im wesentlichen gleich oder unterhalb der psychoakustischen Maskierungsschwelle liegt. Daran anschließend wird das gewichtete Informationssignal mit den Spektralwerten des Kurzzeitspektrums des Audiosignals summiert, um Summen-Spektralwerte zu erhalten, die das Kurzzeitspektrum des Audiosignals und zusätzlich die eingebrachten Informationen umfassen. Schließlich werden die Summen-Spektralwerte wieder verarbeitet, um einen verarbeiteten Datenstrom zu erhalten, der die Daten über die Spektralwerte des Kurzzeitspektrums des Audiosignals und die einzubringenden Informationen umfaßt. Im Falle eines MPEG-AAC-Codierers wird das Verarbeiten der Summen-Spektralwerte wieder das Quantisieren und Entropie-Codieren beispielsweise unter Verwendung eines Huffman-Codes zum Gegenstand haben.

Es sei darauf hingewiesen, daß dadurch nicht die Blockrasterung, die der ursprüngliche Codierer festgelegt hat, der den Datenstrom erzeugt hat, angetastet wird. Dadurch entstehen keine Tandem-Effekte, die zu einem Verlust der Audioqualität führen würden. Darüberhinaus wird es bevorzugt, daß bei der nach dem Gewichten erfolgenden Verarbeitung, die ein Quantisieren umfaßt, die gleiche bzw. die gleichen Quantisierungsschrittweite(n) wie im ursprünglichen Bitstrom verwendet wird bzw. werden, was den Vorteil mit sich bringt, daß die sehr rechenaufwendigen Iterationsschleifen des Quantisierers nicht erneut berechnet werden müssen. Ferner treten keine Tandem-Codier-Effekte auf, die ansonsten unvermeidbar wären, da im Falle einer erneuten Berechnung mehr oder weniger stark abweichende Quantisiererschrittweiten auftreten könnten.

Das erfindungsgemäße Einbringen eines Wasserzeichens direkt in einen Datenstrom ermöglicht beispielsweise das Einbringen einer Kundennummer während der Auslieferung der Musik an einen Kunden, da das Verfahren auf modernen Personalcomputern in mehrfacher Echtzeit ablaufen kann, da u. a. zusätzlich auf die aufwendige Frequenz-Zeit-Transformation verzichtet werden kann, die bei einer vollständigen Decodierung erforderlich sein würde.

Ein weiterer Vorteil der vorliegenden Erfindung besteht darin, daß der Musikanbieter, d. h. der Musikprovider, nicht mehr die PCM-Abtastwerte speichern muß, sondern vorcodierte Datenströme speichern kann, was im Speicherplatz durchaus einen Faktor in der Größenordnung von 12 mit sich bringen kann, und daß der Provider trotzdem kundenspezifische Wasserzeichen einbringen kann, ohne daß zusätzlich Tandem-Codiereffekte auftreten würden, die einen Audioqualitätsverlust zur Folge hätten.

Das erfindungsgemäße Verfahren kann einfach implementiert werden, da nur eine zusätzliche Zeit/Frequenz-Transformation des gespreizten Informationssignals erforderlich ist. Ein weiterer wesentlicher Vorteil besteht darin, daß das erfindungsgemäße Verfahren eine gute Interoperabilität besitzt, d. h. daß Standard-Datenströme verarbeitet werden können, und daß für Wasserzeichen gemäß den bekannten Verfahren und für Wasserzeichen gemäß dem erfindungsgemäßen Verfahren der gleiche Wasserzeichendecodierer verwendet werden kann. Schließlich besteht ein weiterer Vorteil darin, daß ein Audiocodierer das Wasserzeichen nicht mehr auslöschen kann, da eine genaue Steuerung des Verhältnisses zwischen Quantisierungsrauschen und Wasserzeichenenergie besteht.

Es sei darauf hingewiesen, daß es selbstverständlich möglich ist, das Wasserzeichen unbefugt wieder zu entfernen, wenn der mit einem Wasserzeichen versehene Datenstrom decodiert wird und dann wieder codiert wird, jedoch nun mit niedriger Bitrate. In diesem Fall wird die durch den Quantisierer eingeführte Störenergie die Wasserzeichenenergie übersteigen, so daß dann kein Wasserzeichen mehr aus dem Audiosignal extrahiert werden kann. Dies ist jedoch unproblematisch, da die Audioqualität des Audiosignals aufgrund des hohen Quantisierungsrauschen derart stark abgenommen hat, daß ein solches schlechtes Audiosignal auch nicht mehr geschützt werden muß. Ist nämlich in einem Audiosignal das Wasserzeichen zerstört, so ist auch seine Qualität zerstört.

Die psychoakustisch maskierbare Störenergie kann auf verschiedene Arten und Weisen ermittelt werden. Eine erste Option besteht darin, zum Ermitteln der psychoakustisch maskierbaren Störenergie ein psychoakustisches Modell einzusetzen, das aus dem Kurzzeitspektrum die psychoakustische Maskierungsschwelle als Funktion der Frequenz erzeugt. Es existiert eine Vielzahl von psychoakustischen Modellen, wobei hier die psychoakustischen Modelle besonders von Vorteil sind, die ohnehin mit Spektralwerten des Kurzzeitspektrums arbeiten, da diese Spektralwerte direkt aufgrund des teilweisen Entpackens des Datenstroms vorliegen. Alternativ können jedoch auch psychoakustische Modelle zum Einsatz kommen, die für Zeitbereichsdaten ausgestaltet sind, wobei hier im Gegensatz zu der oben beschriebenen Option eine Frequenz-Zeit-Transformation erforderlich sein würde. Obwohl die Möglichkeit des Berechnens eines psychoakustischen Modells, um die psychoakustische Maskierungsschwelle des Kurzzeitspektrums zu erhalten, relativ rechenzeitaufwendig ist, liefert jedoch bereits diese Möglichkeit den entscheidenden Vorteil, daß keine Tandem-Codiereffekte erzeugt werden, da die Blockrasterung nicht angetastet wird.

Eine weitere, im Rechenzeitaufwand günstigere Option zum Ermitteln der psychoakustisch maskierbaren Störenergie besteht darin, daß der Datenstrom derart erzeugt worden ist, daß er neben den Spektralwerten und den üblichen Seiteninformationen auch für jedes Kurzzeitspektrum die psychoakustische Maskierungsschwelle als Funktion der Frequenz enthält. Ein Ermitteln der psychoakustisch maskierbaren Störenergie funktioniert dann einfach durch Extrahieren der im Datenstrom übertragenen psychoakustischen Maskierungsschwelle. Bei dieser Möglichkeit und der vorher beschriebenen Möglichkeit, bei der das psychoakustische Maskierungsmodell berechnet wird, ist die psychoakustisch maskierbare Störenergie die psychoakustische Maskierungsschwelle selbst. Nachteilig an dem Verfahren des Übertragens der psychoakustischen Maskierungsschwelle im Datenstrom ist die Tatsache, daß ein Spezial-Audiocodierer benötigt wird, da bei üblichen Audio-Codierern die psychoakustische Maskierungsschwelle nicht übertragen wird, sondern lediglich die Spektralwerte und die entsprechenden Skalenfaktoren. In geschlossenen Systemen ist jedoch Kompatibilität zu Standard-Datenströmen nicht erforderlich. Hier kann diese Option daher mit einfachem Aufwand und rechenzeitgünstig implementiert werden.

Eine weitere Möglichkeit besteht darin, einen Spezial-Audiocodierer vorzusehen, dessen Quantisierer immer so arbeitet, daß das Quantisierungsrauschen um einen vorbestimmten Betrag geringer als die psychoakustische Maskierungsschwelle ist. Dies bedeutet, daß der Codierer so ausgelegt ist, daß sein Quantisierer etwas feiner quantisiert, als er eigentlich müßte, derart, daß zusätzliche Störenergie hinzugefügt werden kann, ohne daß eine Störung hörbar wird. Diese zusätzliche Störenergie kann dann beim Einbringen von Informationen in den Datenstrom "aufgebraucht" werden, um die Informationen einzubringen. Im Falle eines optimalen psychoakustischen Modells führt diese Möglichkeit zu einem Datenstrom mit eingebrachtem Wasserzeichen, der überhaupt keine Qualitätsverschlechterung erlitten hat. Nachteilig an diesem Verfahren ist ebenso wie beim direkten Übertragen der psychoakustischen Maskierungsschwelle die Tatsache, daß dieses Verfahren nicht mit üblichen Codierern kompatibel ist.

Eine weitere Möglichkeit zum Ermitteln der psychoakustisch maskierbaren Störenergie besteht darin, die tatsächlich durch das Quantisieren des Codierers, der den Datenstrom erzeugt hat, eingebrachte Störenergie zu ermitteln und daraus die psychoakustisch maskierbare Störenergie, die die Informationen beim Gewichten erhalten werden, abzuleiten. Diese Option geht davon aus, daß der Codierer so quantisiert hat, daß die Störenergie unter der psychoakustischen Maskierungsschwelle oder lediglich knapp darüber gelegen hat. Dieses Verfahren kommt ebenfalls wie das als erste Möglichkeit beschriebene Verfahren mit den Standard-Bitströmen aus, da lediglich die Spektralwerte und die Skalenfaktoren, die beide im Datenstrom vorhanden sind, benötigt werden, um die psychoakustisch maskierbare Störenergie zu erhalten. Aus den Skalenfaktoren kann die Schrittgröße des Quantisierers, der dem entsprechenden Skalenfaktor zugeordnet ist, ermittelt werden, um damit die in einem Skalenfaktorband eingebrachte Störenergie zu errechnen, die typischerweise gleich der psychoakustischen Maskierungsschwelle sein wird oder darunter liegen wird. Die beim Gewichten verwendete psychoakustisch maskierbare Störenergie für die eingebrachten Informationen kann gleich der Quantisierungsstörenergie sein, sie kann aber auch einen Faktor zwischen größer als Null und kleiner als Eins haben, wobei ein Faktor näher bei Null zu weniger hörbaren Störungen aufgrund des Wasserzeichens führen wird, aber beim Extrahieren problematischer sein könnte als ein Faktor näher bei Eins.

Bevorzugte Ausführungsbeispiele der vorliegenden Erfindung werden nachfolgend bezugnehmend auf die beiliegenden Zeichnungen detailliert erläutert. Es zeigen:

Fig. 1 ein Blockdiagramm einer erfindungsgemäßen Vorrichtung zum Einbringen von Informationen in einen Datenstrom;

Fig. 2 ein detailliertes Blockdiagramm der Wasserzeicheneinrichtung von Fig. 1;

Fig. 3a eine schematische Darstellung eines Verfahrens zum Ermitteln der maskierbaren Störenergie unter Verwendung eines psychoakustischen Modell;

Fig. 3b eine schematische Darstellung eines Verfahrens zum Ermitteln der maskierbaren Störenergie, wenn die psychoakustische Maskierungsschwelle im Datenstrom übertragen wird;

Fig. 3c eine schematische Darstellung eines Verfahrens zum Ermitteln der maskierbaren Störenergie, wenn die Störenergie unter Kenntnis der Spektralwerte und der Skalenfaktoren geschätzt wird;

Fig. 3d eine schematische Darstellung eines Verfahrens zum Ermitteln der psychoakustisch maskierbaren Störenergie, wenn im Datenstrom Energie für das Wasserzeichen freigehalten wird; und

Fig. 4 ein Blockdiagramm eines erfindungsgemäßen Audiocodierers, der entweder die psychoakustische Maskierungsschwelle in den Datenstrom schreibt, oder den vorbestimmten Betrag für das in Fig. 3d beschriebene Verfahren in den Datenstrom schreibt und dessen Quantisierer entsprechend gesteuert ist.

Bevor detaillierter auf die einzelnen Figuren eingegangen wird, wird der systemtheoretische Hintergrund der vorliegenden Erfindung kurz beleuchtet. Generell darf das Einbringen der Informationen in das Audiosignal zu keiner bzw. nur einer sehr schwer hörbaren Qualitätsverschlechterung des Audiosignals führen. Um festzustellen, wieviel Energie das Signal, das die einzubringenden Informationen darstellt, haben darf, wird unter Verwendung eines psychoakustischen Modells die Maskierungsschwelle des Audiosignals fortlaufend berechnet. Die frequenzselektive Berechnung der Maskierungsschwelle unter Verwendung beispielsweise der kritischen Bänder sowie eine Vielzahl weiterer psychoakustischer Modelle sind in der Technik bekannt. Beispielhaft wird auf den Standard MPEG2-AAC (ISO/IEC 13818-7) verwiesen.

Das psychoakustische Modell führt zu einer Maskierungsschwelle für ein Kurzzeitspektrum des Audiosignals. Üblicherweise wird die Maskierungsschwelle über der Frequenz variieren. Per Definition wird angenommen, daß ein in das Audiosignal eingebrachtes Signal dann unhörbar sein wird, wenn die Energie dieses Signals unterhalb der Maskierungsschwelle ist. Die Maskierungsschwelle hängt stark von der Zusammensetzung des Audiosignals ab. Rauschhafte Signale haben eine höhere Maskierungsschwelle als sehr tonale Signale. Die Energie des Signals, das in das Audiosignal eingebracht wird, variiert daher stark über der Zeit. Üblicherweise wird zum Decodieren der in ein Audiosignal eingebrachten Informationen ein bestimmtes Signal/Rausch-Verhältnis benötigt. Dabei kann es vorkommen, daß bei sehr tonalen Audiosignalabschnitten die Energie des zusätzlich eingebrachten Signals derart gering wird, daß das Signal/Rausch-Verhältnis zum sicheren Decodieren nicht mehr ausreicht. Ein Decodierer kann daher in solchen Bereichen einzelne Bits nicht mehr korrekt decodieren. Systemtheoretisch gesehen kann daher das Einbringen von Informationen in ein Audiosignal in Abhängigkeit von der psychoakustischen Maskierungsschwelle als das Übertragen eines Datensignals über einen Kanal mit stark variierender Störenergie betrachtet werden, wobei das Audiosignal, d. h. das Musiksignal, als Störsignal aufgefaßt wird.

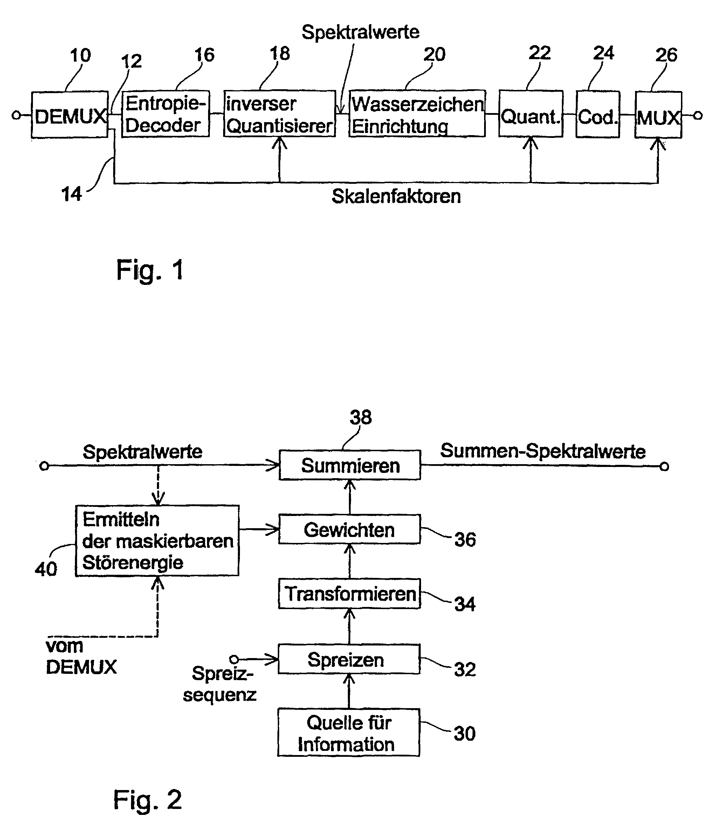

Fig. 1 zeigt ein Blockdiagramm einer erfindungsgemäßen Vorrichtung bzw. eines erfindungsgemäßen Verfahrens zum Einbringen von Informationen in einen Datenstrom, der Spektralwerte aufweist, die ein Kurzzeitspektrum eines Audiosignals darstellen. Der Datenstrom, der am Eingang eines Datenstrom-Demultiplexers 10 anliegt, wird, wenn er gemäß dem erwähnten MPEG-AAC-Standard verarbeitet ist, zunächst allgemein in Spektralwerte auf einer Leitung 12 und Seiteninformationen auf einer Leitung 14 zerlegt, wobei von den Seiteninformationen hier die Skalenfaktoren speziell genannt seien. Die Spektralwerte, die hinter dem Demultiplexer 10 noch Entropie-codiert sind, werden dann einem Entropie-Decodierer 16 zugeführt und dann einem inversen Quantisierer 18, der unter Verwendung der quantisierten Spektralwerte und der dazu gehörigen Skalenfaktoren, die über die Leitung 14 dem inversen Quantisierer 18 zu Verfügung gestellt werden, die Spektralwerte des Audiosignals erzeugt, die das Kurzzeitspektrum desselben darstellen. Die Spektralwerte werden dann in eine Wasserzeicheneinrichtung 20 eingespeist, die Summen-Spektralwerte erzeugt, die das Kurzzeitspektrum des Audiosignals und darüber hinaus die einzubringenden Informationen umfassen. Diese Summen-Spektralwerte werden dann wieder in einen Quantisierer 22 gespeist und in einem daran anschließenden Entropie-Codierer 24 Entropie-codiert, um schließlich einem Datenstrom-Multiplexer 26 zugeführt zu werden, der auch wieder die nötigen Seiteninformationen, wie z. B. die Skalenfaktoren, erhält. Am Ausgang des Multiplexers 26 liegt dann ein verarbeiteter Datenstrom vor, der sich vom Datenstrom am Eingang des Demultiplexers 10 darin unterscheidet, daß er nun ein Wasserzeichen hat, d. h. daß in ihn Informationen eingebracht worden sind.

Bevor näher auf Fig. 2 eingegangen wird, die eine detailliertere Darstellung der Wasserzeicheneinrichtung 20 aufweist, sei zum Verständnis auf einen MPEG-2 AAC-Audiocodierer eingegangen, wie er beispielsweise im Anhang B des Standard ISO/IEC 13818-7:1997(E) als informativer Teil beschrieben ist. Einem solchen Codierer liegt grundsätzlich die Idee zugrunde, das Quantisierungsrauschen unter die sogenannte psychoakustische Maskierungsschwelle zu bringen, d. h. zu verstecken. Zur Transformation der Audio-Abtastwerte in den Frequenzbereich, d. h. zum Erzeugen der spektralen Darstellung des Audiosignals wird eine Analysefilterbank eingesetzt, die als kritisch-unterabgetastete DCT (DCT = diskrete Cosinustransformation) realisiert ist, und die einen Überlappungsgrad von 50% hat. Ihr Zweck besteht darin, eine spektrale Darstellung des Eingangssignals zu schaffen, das schließlich quantisiert und codiert wird. Zusammen mit einer entsprechenden Filterbank im Decodierer entsteht somit ein Synthese/Analyse-System.

Das psychoakustische Modell, das in solchen Codierern verwendet wird, basiert auf dem psychoakustischen Phänomen der Maskierung. Sowohl Frequenzbereichsmaskierungseffekte als auch Zeitbereichmaskierungseffekte können dabei modelliert werden. Das psychoakustische Modell liefert einen Schätzwert für "Rausch"-Energie, die dem ursprünglichen Audiosignal hinzugefügt werden kann, ohne daß hörbare Störungen auftreten. Diese maximal zulässige Energie wird als psychoakustische Maskierungsschwelle bezeichnet.

Der Quantisierer 22 sowie der Codierer 24 in Fig. 1 werden im nachfolgenden beschrieben. Typischerweise wird mehr als eine Spektrallinie mit derselben Quantisierer-Schrittgröße quantisiert. Daher werden mehrere benachbarte Spektrallinien in sogenannte Skalenfaktorbänder gruppiert. Der Quantisierer optimiert die Quantisiererschrittgröße für jedes Skalenfaktorband. Die Quantisiererschrittgröße wird so bestimmt, daß der Quantisierungsfehler unter oder gleich der berechneten psychoakustischen Maskierungsschwelle ist, um sicherzustellen, daß das Quantisierungsrauschen unhörbar ist. Es ist zu sehen, daß zwei Begrenzungen berücksichtigt werden müssen, zwischen denen ein Kompromiß gefunden werden muß. Einerseits sollte der Bitverbrauch so niedrig als möglich gehalten werden, um hohe Kompressionsverhältnisse, d. h. einen hohen Codiergewinn, zu erreichen. Andererseits muß sichergestellt werden, daß das Quantisierungsrauschen unter der psychoakustischen Maskierungsschwelle ist, damit im codierten und wieder decodierten Audiosignal keine Störungen hörbar sind. Typischerweise wird dieses Optimierungsverfahren in einer iterativen Schleife berechnet. Das Resultat dieser Schleife ist eine Quantisiererschrittgröße, die mit einem Skalenfaktor für ein Skalenfaktorband eindeutig korrespondiert. Anders ausgedrückt werden die Spektralwerte eines Skalenfaktorbandes mit einer Quantisiererschrittgröße quantisiert, die dem für das Skalenfaktorband maßgeblichen Skalenfaktor eindeutig zugeordnet ist. Das heißt, daß zwei verschiedene Skalenfaktoren auch zwei verschiedene Quantisiererschrittgrößen zur Folge haben können.

Der Bitstrom wird durch einen Bitstrommultiplexer zusammengesetzt, der im wesentlichen Formatierungsaufgaben erfüllt. Der Datenstrom, der im Falle eines Binärsystems ein Bitstrom ist, enthält somit die quantisierten und codierten Spektralwerte oder Spektralkoeffizienten sowie die Skalenfaktoren und weitere Seiteninformationen, die im erwähnten MPEG-AAC-Standard detailliert dargestellt und erläutert sind.

Fig. 2 zeigt ein detaillierteres Blockdiagramm der Wasserzeicheneinrichtung 20 von Fig. 1. An einer Quelle 30 für Informationseinheiten werden Informationseinheiten, vorzugsweise in Form von Bits, einer Einrichtung 32 zum Spreizen zugeführt. Die Einrichtung 32 zum Spreizen basiert grundsätzlich auf einer Spread-Spektrum-Modulation, die insbesondere unter Verwendung einer Pseudo-Noise-Spreizsequenz bei einer Korrelation im Wasserzeichenextraktor günstig ist. Die Informationen werden Bit für Bit mit der Spreizsequenz beaufschlagt. Das Beaufschlagen findet vorzugsweise so statt, daß für ein Informationsbit mit einem logischen Pegel von +1 die Spreizsequenz unverändert am Ausgang der Einrichtung 32 erzeugt wird, während für ein Informationsbit mit einem logischen Pegel von 0, was beispielsweise einem Spannungspegel von -1 entsprechen kann, die umgekehrte Spreizsequenz am Ausgang der Einrichtung 32 erzeugt wird. Damit entsteht ein "Zeitsignal" am Ausgang der Einrichtung 32, das die gespreizten Informationen aus der Quelle 30 für Informationen enthält. Dieses gespreizte Informationssignal wird dann durch eine Einrichtung 34 zum Transformieren in seine spektrale Darstellung überführt, die ein FFT-Algorithmus, eine MDCT, etc., aber auch eine Filterbank sein kann. Die spektrale Darstellung des gespreizten Informationssignals wird in einer Einrichtung 36 gewichtet, um dann mit den Spektralwerten in einer Einrichtung 38 summiert zu werden, derart, daß am Ausgang der Einrichtung 38 die Summen-Spektralwerte anliegen, die dann bezugnehmend auf Fig. 1 quantisiert (22) und codiert (24) werden können, um dem Bitstrom-Multiplexer 26 zugeführt zu werden. Die Wasserzeicheneinrichtung 20 enthält ferner eine Einrichtung 40 zum Ermitteln der maskierbaren Störenergie für das Kurzzeitspektrum, das durch die Spektralwerte gegeben ist.

Es sei darauf hingewiesen, daß die Einrichtung 34 zum Transformieren des gespreizten Informationssignals vorzugsweise eine Spektraltransformation durchführt, die der dem Datenstrom am Eingang des Demultiplexers 10 (Fig. 1) zugrunde liegenden Transformation entspricht. Das heißt, daß die Einrichtung 34 zum Transformieren vorzugsweise dieselbe modifizierte diskrete Cosinustransformation durchführt, die ursprünglich zum Erzeugen des nicht-verarbeiteten Datenstroms verwendet wurde. Dies ist ohne weiteres möglich, da Informationen, wie z. B. Fenstertyp, Fensterform, Fensterlänge usw., als Seiteninformationen im Bitstrom übertragen werden. Diese Verknüpfung ist durch die in Fig. 2 gestrichelt dargestellte Linie vom Bitstrom-Demultiplexer 10 (Fig. 1) angedeutet.

Wie es bereits bezugnehmend auf Fig. 1 ausgeführt worden ist, werden die Summen-Spektralwerte nach der Addition im Summierer 38 wieder einer Quantisierung und Codierung unterzogen. Hier stellt sich die Frage, wie das Quantisiererintervall, d. h. die Quantisiererschrittgröße, auf die bereits eingegangen worden ist, bestimmt werden soll, d. h. ob die Iterationen erneut durchgeführt werden müssen, oder ob darauf verzichtet werden kann. Aufgrund der Tatsache, daß die Wasserzeichenenergie im Vergleich zur Audiosignalenergie üblicherweise sehr klein ist, können vorzugsweise dieselben Skalenfaktoren wie im ursprünglichen Bitstrom eingesetzt werden. Dies ist in Fig. 1 durch die Verbindungslinie 14 vom Demultiplexer 10 zum Multiplexer 26 dargestellt. Das heißt, daß das Quantisieren durch den Quantisierer 22 wesentlich einfacher durchgeführt werden kann, da es nicht mehr notwendig ist (aber dennoch möglich ist), die Iterationsschleifen auszuführen, um einen optimalen Kompromiß zwischen Bitrate und Quantisiererschrittgröße zu bestimmen. Stattdessen werden vorzugsweise einfach die bereits bekannten Skalenfaktoren verwendet.

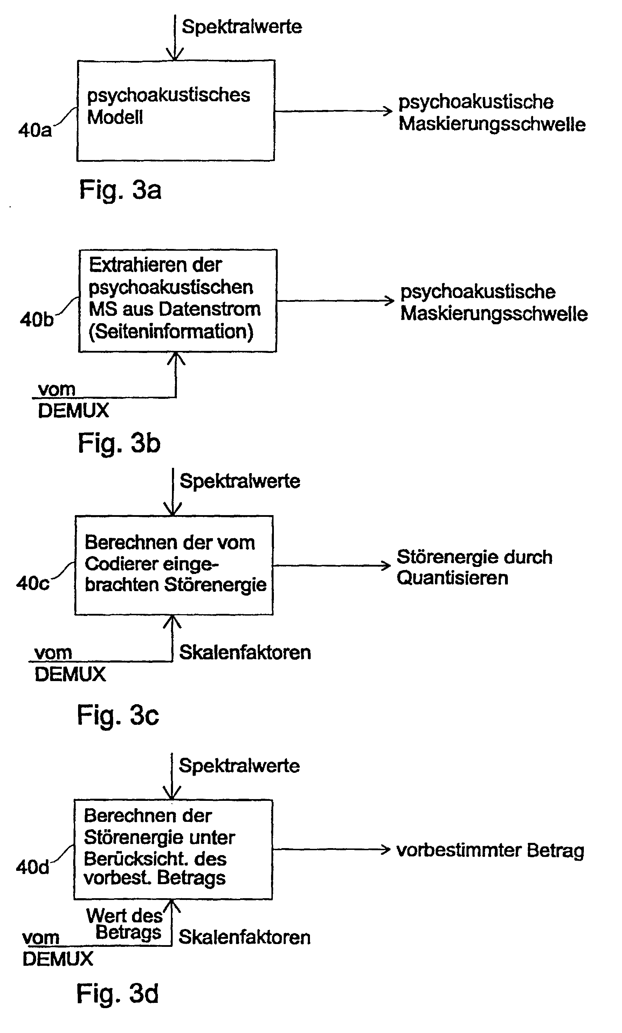

Im nachfolgenden wird auf verschiedene Möglichkeiten eingegangen, um die durch das Kurzzeitspektrum maskierbare Störenergie zu ermitteln, die beim Gewichten der spektralen Darstellung des gespreizten Informationssignals benötigt wird. Hierzu existieren verschiedene Möglichkeiten, die nachfolgend bezugnehmend auf die Fig. 3a-3d erläutert sind.

In Fig. 3a wird ein psychoakustisches Modell eingesetzt, um unter Verwendung der Spektralwerte des Audiosignals die psychoakustische Maskierungsschwelle des entsprechenden Kurzzeitspektrums zu errechnen. Aufgrund der Tatsache, daß psychoakustische Modelle in der Literatur und dem erwähnten Standard beschrieben sind, sei hier lediglich erwähnt, daß vorzugsweise psychoakustische Modelle verwendet werden können, die ohnehin mit Spektraldaten arbeiten bzw. eine Zeit/Frequenz-Transformation beinhalten. In diesem Fall ist das psychoakustische Modell zum ursprünglichen psychoakustischen Modell, das einem jeden Codierer zugrunde liegt, darin vereinfacht, daß dasselbe gleich mit Spektralwerten "gefüttert" werden kann, so daß überhaupt keine Frequenz/Zeit-Transformation im psychoakustischen Modell erforderlich ist. Das psychoakustische Modell schließlich wird die psychoakustische Maskierungsschwelle für das Kurzzeitspektrum ausgeben, derart, daß im Block 36 (Fig. 2) das Spektrum des gespreizten Informationssignals so geformt werden kann, daß es in jedem Skalenfaktorband eine Energie hat, die gleich der psychoakustischen Maskierungsschwelle bzw. unterhalb der psychoakustischen Maskierungsschwelle in diesem Skalenfaktorband ist. Es sei darauf hingewiesen, daß die psychoakustische Maskierungsschwelle eine Energie ist, wobei es angestrebt wird, daß die spektrale Darstellung des Informationssignals möglichst gleich der psychoakustischen Maskierungsschwelle ist, um die Informationen in das Audiosignal durch möglichst viel Energie einzubringen, um in einem Extraktor des Wasserzeichens möglichst gute Korrelationsspitzen zu erhalten.

Die in Fig. 3a gezeigte erste Möglichkeit hat den Vorteil, daß die psychoakustische Maskierungsschwelle sehr genau berechnet werden kann, und daß dieses Verfahren mit üblichen Datenströmen vollständig kompatibel ist. Nachteilig darin ist jedoch die Tatsache, daß die Berechnung eines psychoakustischen Modells üblicherweise relativ zeitaufwendig sein kann, so daß gesagt werden kann, daß diese Möglichkeit zwar sehr genau und interoperabel ist, jedoch relativ viel Zeit benötigt.

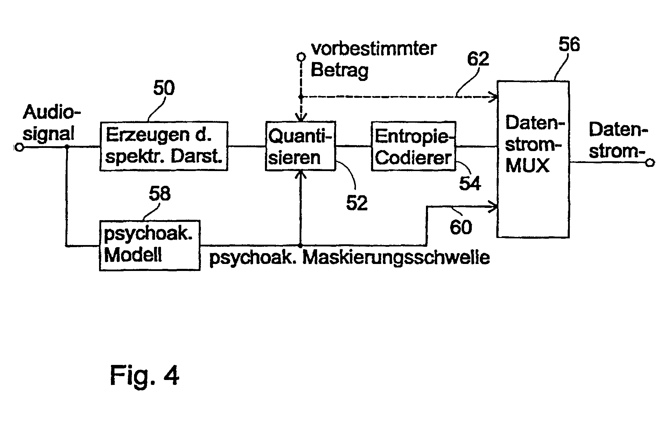

Eine weitere Möglichkeit, die in Fig. 3b gezeigt ist, um die psychoakustisch maskierbare Störenergie zu erhalten, besteht darin, daß im Codierer, der den Datenstrom am Eingang des Demultiplexers 10 (Fig. 1) erzeugt hat, die psychoakustische Maskierungsschwelle für jedes Kurzzeitspektrum in den Bitstrom geschrieben wird, derart, daß die erfindungsgemäße Vorrichtung zum Einbringen von Informationen in einen Datenstrom lediglich die psychoakustische Maskierungsschwelle für jedes Kurzzeitspektrum aus den Seiteninformationen des Datenstroms zu extrahieren braucht (40b), um die psychoakustische Maskierungsschwelle zur Einrichtung 36 zum Gewichten der spektralen Darstellung des gespreizten Informationssignals (Fig. 2) auszugeben. Diese Möglichkeit hat den Vorteil, daß sie ebenfalls sehr genau ist und darüberhinaus sehr schnell ist, da lediglich zugegriffen und nicht gerechnet werden muß, es wird jedoch die Interoperabilität beeinträchtigt, d. h. Standardbitströme können nicht mehr nachträglich mit Wasserzeichen versehen werden, da sie keine psychoakustischen Maskierungsschwellen enthalten. Man benötigt hier somit einen erfindungsgemäßen Spezialcodierer, wie er in Fig. 4 beschrieben ist.

In Fig. 3c ist eine weitere Möglichkeit zum Ermitteln der psychoakustisch maskierbaren Störenergie gezeigt. Hier wird die psychoakustisch maskierbare Störenergie unter Verwendung der Spektralwerte und der Skalenfaktoren berechnet (40c). Es wird davon ausgegangen, daß der ursprüngliche Codierer, der den Datenstrom, in den das Wasserzeichen eingebracht werden soll, erzeugt hat, die durch die Quantisierung eingeführte Störenergie bereits so gewählt hat, daß sie unter der psychoakustischen Maskierungsschwelle bzw. auf der psychoakustischen Maskierungsschwelle liegt. Dieses Verfahren ist zwar etwas ungenauer als das direkte Berechnen der psychoakustischen Maskierungsschwelle, ist jedoch im Vergleich zum direkten Berechnen der psychoakustischen Maskierungsschwelle sehr schnell und hält gleichzeitig die Interoperabilität aufrecht, d. h. arbeitet auch mit Standard-Bitströmen zusammen.

Im nachfolgenden wird darauf eingegangen, wieso diese dritte Möglichkeit etwas ungenauer ist. Es existieren verschiedene Codiereransätze, die sich beispielsweise in den verwendeten Quantisiererimplementationen unterscheiden. Wie es bereits ausgeführt worden ist, darf ein Quantisierer die vorgeschriebene Bitrate nicht überschreiten. Andererseits soll er die psychoakustische Maskierungsschwelle einhalten. So kann der Fall auftreten, daß ein Quantisierer die zur Verfügung stehende Bitrate gar nicht benötigt, da beispielsweise eine hohe Bitrate vorliegt, oder wenn ein Musikstück zu codieren ist, bei dem der Codiergewinn sehr hoch ist, wie es beispielsweise bei tonalen Stücken der Fall ist. Bestimmte Quantisierer arbeiten hier so, daß sie feiner als nötig quantisieren und somit wesentlich weniger Störenergie durch Quantisieren in das Audiosignal einführen, als sie dürften. Es ist daher einsichtig, daß die erfindungsgemäße Vorrichtung, wie sie in Fig. 3c beschrieben ist, davon ausgeht, daß die psychoakustische Maskierungsschwelle wesentlich geringer ist als sie tatsächlich sein dürfte, was schließlich dazu führt, daß die spektrale Darstellung des gespreizten Informationssignals nach dem Gewichten wesentlich weniger Energie hat als sie haben dürfte, wodurch nicht die ganze verfügbare Energie, die das Wasserzeichen haben dürfte, ausgenutzt wird. Dies würde jedoch nicht der Fall sein, wenn ein Quantisierer eingesetzt wird, der immer die maximal zulässige Störenergie durch das Quantisieren einführt und eventuell verbleibende Bits nicht beschreibt bzw. mit irgendwelchen bei einer Decodierung nicht berücksichtigten Werten füllt. In diesem Fall wäre die in Fig. 3c dargestellte Option genauso genau wie die beiden ersten Möglichkeiten. Im Falle des variablen Quantisierers entsteht jedoch auch eine variable Bitrate. In diesem Fall könnte die Wasserzeicheneinrichtung auch dazu verwendet werden, die Bitrate konstant zu machen, durch Auffüllen von Bits, die das Wasserzeichen darstellen, so daß die konstante Bitrate gleich der höchsten Bitrate des ursprünglichen Datenstroms mit variabler Bitrate ist.

Im nachfolgenden wird darauf eingegangen, wie unter Verwendung der Spektralwerte und der Skalenfaktoren und darüberhinaus der Charakteristik des Quantisierers die Störenergie berechnet wird, die durch Quantisieren in ein Skalenfaktorband eingeführt worden ist. Hierbei gilt folgende Gleichung für die Energie Fxi des Quantisierungsfehlers für einen Spektralwert $x_i$:

$$|Fxi|^2 = (q^{2\alpha}/12\alpha^2) \cdot x_i^{2(1-\alpha)}$$

Es sei darauf hingewiesen, daß diese Gleichung für ungleichmäßige Quantisierer gilt, wie sie beispielsweise bei dem Standard MPEG-AAC vorgesehen sind. Für gleichmäßige Quantisierer würde der zweite Term einfach wegfallen, wenn für $\alpha = 1$ gesetzt wird.

Der in der Gleichung auftretende Faktor q hängt mit der Quantisiererschrittgröße QS folgendermaßen zusammen:

$$q = 2^{QS/4}$$

Der Faktor $\alpha$ lautet für den MPEG-AAC-Quantisierer 3/4.

Die Energie des Quantisierungsfehlers in einem Skalenfaktorband ist dann die Summe der $|Fxi|^2$ in einem Skalenfaktorband. Diese Energie muß, damit sie nicht hörbar ist, kleiner oder gleich der psychoakustischen Maskierungsschwelle in diesem Skalenfaktorband sein. Es sei darauf hingewiesen, daß die psychoakustische Maskierungsschwelle in einem Skalenfaktorband konstant ist, jedoch für unterschiedliche Skalenfaktorbänder unterschiedliche Werte einnimmt. Für die Energie des Quantisierungsfehlers $x_{min}$ ergibt sich folgender Wert:

$$xmin = \sum_i [(2^{3/8 \cdot QS})/(27/4) \cdot x_i^{1/2}]$$

Der Index i soll anzeigen, daß immer über die Spektralwerte in einem Skalenfaktorband summiert werden muß, da die psychoakustische Maskierungsschwelle üblicherweise als Energie für dieses Skalenfaktorband gegeben ist.

Es sei darauf hingewiesen, daß in den Seiteninformationen des Datenstroms nicht direkt die Quantisiererschrittgrößen für die einzelnen Skalenfaktoren gegeben sind, daß jedoch gemäß Vereinbarung, wie sie im AAC-Standard aufgeführt ist, die Quantisiererschrittgröße, die jedem Skalenfaktor zugeordnet ist, eindeutig abgeleitet werden kann. Darüberhinaus muß die Charakteristik des im ursprünglichen Codierer zum Erzeugen des Datenstroms verwendeten Quantisierers bekannt sein, d. h., wenn er ein ungleichmäßiger Quantisierer ist, der Kompressionsfaktor desselben, der beim AAC-Standard der Faktor 3/4 ist.

Die Spektrallinien der spektralen Darstellung des gespreizten Informationssignals werden nun, wie es bereits ausgeführt worden ist, so gewichtet, daß sie zusammen eine Energie haben, die kleiner oder gleich der psychoakustisch maskierbaren Störenergie, und im Falle der in Fig. 3c beschriebenen Option gleich der Störenergie des Quantisierungsprozesses ist.

Wenn der Fall betrachtet wird, daß die durch die Quantisierung in Skalenfaktorband eingeführte Störenergie bereits gleich der psychoakustischen Maskierungsschwelle ist, und dann dieselbe Energie noch einmal, jedoch nun für die einzubringenden Informationen in das Audiosignal eingebracht wird, so ist zu sehen, daß die insgesamte Energie, d. h. die Störenergie aufgrund des Quantisierens und die Energie für die Informationen, die psychoakustische Maskierungsschwelle überschreiten können, was zu hörbaren Qualitätsverlusten führen kann, die jedoch aufgrund der Begrenzung der Energie der Informationen auf die psychoakustische Maskierungsschwelle klein sein werden, da die psychoakustische Maskierungsschwelle um einen Faktor größer als 1 verletzt wird. Wie es bereits ausgeführt worden ist, wird eine Wasserzeichenenergie in der Größenordnung der psychoakustischen Maskierungsschwelle dann zu Störungen führen, wenn auch das Quantisierungsrauschen bereits in der Größenordnung der psychoakustischen Maskierungsschwelle liegt. Es wird daher bevorzugt, die psychoakustisch maskierbare Störenergie, mit der gewichtet wird, so zu wählen, daß die gesamte Störenergie (Quantisierungsrauschen plus "Störenergie" der Informationen) kleiner als das 1,5-fache der psychoakustischen Maskierungsschwelle ist, wobei noch kleinere Faktoren bis nahe 1,0 möglich sind. Es sei darauf hingewiesen, daß auch kleine Faktoren sinnvoll sind, da aufgrund der Spreizung des Informationssignals bereits eine hohe Informationsredundanz eingeführt worden ist.

Anders ausgedrückt wird das Einbringen eines Wasserzeichens in ein Audiosignal, dessen psychoakustische Maskierungsschwelle bereits vollständig durch Störenergie aufgrund des Quantisierens verbraucht ist, zu einer geringen Verschlechterung der Audioqualität führen, die jedoch durch die Vorteile des Wasserzeichens leicht aufgehoben wird.

Um diese Beeinträchtigung zu überwinden, kann das in Fig. 3d gezeigte Konzept eingesetzt werden, bei dem von vorneherein der Quantisierer im Codierer derart gesteuert wird, daß die durch die Quantisierung eingeführte Störenergie durch Einstellen der Quantisiererschrittgröße so gewählt wird, daß sie immer einen vorbestimmten Betrag unter der psychoakustischen Maskierungsschwelle bleibt. Mit anderen Worten arbeitet ein Audiocodierer für ein solches Konzept so, daß er feiner quantisiert als nötig, wodurch ein Energiepotential für die einzubringenden Informationen, d. h. für das Wasserzeichen freibleibt. Dies hat den Vorteil, daß ein Wasserzeichen vollständig ohne Qualitätsverlust eingebracht werden kann, wenn beim Ermitteln der psychoakustisch maskierbaren Störenergie (40d) die ja nun um einen vorbestimmten Betrag kleiner als die psychoakustische Maskierungsschwelle ist, in der Einrichtung 40d der vorbestimmte Betrag berücksichtigt wird, so daß die Störenergie aufgrund des Quantisierens und die Energie aufgrund der einzubringenden Informationen zusammen gleich oder kleiner als die psychoakustische Maskierungsschwelle sind. Da die gewichteten Spektralwerte des gespreizten Informationssignals mit den Spektralwerten des Audiosignals summiert werden, sind die Spektralwerte des Informationssignals nach ihrer Gewichtung gleich oder kleiner als der vorbestimmte Betrag.

Diese Option hat den Vorteil, daß ein Wasserzeichen ohne jeglichen Qualitätsverlust in einen Datenstrom eingebracht werden kann, daß jedoch einerseits die Interoperabilität leidet, und da der Quantisierer im Codierer immer um den vorbestimmten Betrag unter der psychoakustischen Maskierungsschwelle bei der Einstellung der Störenergie durch das Quantisieren bleiben muß. Andererseits ist diese Möglichkeit in der Implementation sehr effizient, da kein psychoakustisches Modell berechnet werden muß.

Im nachfolgenden wird auf Fig. 4 eingegangen, wobei Fig. 4 zwei Möglichkeiten für einen Codierer für Audiosignale zeigt, um einen Datenstrom zu erzeugen, der erfindungsgemäß besonders für ein Einbringen von Informationen geeignet ist. Ein solcher Audiocodierer kann grundsätzlich so aufgebaut sein, wie ein bekannter Audiocodierer, derart, daß er eine Einrichtung 50 zum Erzeugen einer spektralen Darstellung des Audiosignals, einen Quantisierer 52 zum Quantisieren der spektralen Darstellung des Audiosignals, einen Entropie-Codierer 54 zum Entropie-Codieren der quantisierten Spektralwerte und schließlich einen Datenstrommultiplexer 56 umfaßt. Der Datenstrom, der von dem Datenstrom-Multiplexer 56 ausgegeben wird, erhält von einem ebenfalls bekannten psychoakustischen Modell 58 über den Datenstrommultiplexer 56 die psychoakustische Maskierungsschwelle, die im Gegensatz zu einem bekannten Audiocodierer nun in den Datenstrom geschrieben wird, derart, daß die erfindungsgemäße Vorrichtung zum Einbringen von Informationen einfach auf die psychoakustische Maskierungsschwelle in dem Datenstrom zugreifen kann. Der in Fig. 4 durch die durchgezogene Linie 60 dargestellte Codierer ist somit das Gegenstück zu der in Fig. 1 gezeigten Vorrichtung zum Einbringen von Informationen, die als Einrichtung zum Ermitteln der maskierbaren Störenergie die in Fig. 3b gezeigte Option enthält.

In Fig. 4 gestrichelt ist die Audiocodierermöglichkeit gemäß der vorliegenden Erfindung dargestellt, die zu der in Fig. 3d gezeigten Option für die Einrichtung 40 zum Ermitteln der maskierbaren Störenergie in der in Fig. 1 gezeigten erfindungsgemäßen Vorrichtung korrespondiert. Hierbei wird der Quantisierer durch einen vorbestimmten Betrag derart gesteuert, daß die durch die Quantisierung eingeführte Störenergie um den vorbestimmten Betrag unterhalb der psychoakustischen Maskierungsschwelle ist, wobei der Wert des vorbestimmten Betrags über die gestrichelte Leitung 62 in den Datenstrommultiplexer 56 eingespeist wird, um in dem Datenstrom enthalten zu sein, derart, daß die erfindungsgemäße Vorrichtung zum Einbringen von Informationen auf den vorbestimmten Betrag zugreifen kann, um entsprechend gewichten zu können (Block 36 in Fig. 2).

**Patentansprüche**

1.    Verfahren zum Einbringen von Informationen in einen Datenstrom, der Daten über Spektralwerte aufweist, die ein Kurzzeitspektrum eines Audiosignals darstellen, mit folgenden Schritten:

Verarbeiten (10, 16, 18) des Datenstroms, um die Spektralwerte des Kurzzeitspektrums des Audiosignals zu erhalten;

Beaufschlagen (32) der Informationen mit einer Spreizsequenz, um ein gespreiztes Informationssignal zu erhalten;

Erzeugen (34) einer Spektraldarstellung des gespreizten Informationssignals, um ein spektrales gespreiztes Infonnationssignal zu erhalten;

Ermitteln (40a; 40b; 40c; 40d) einer psychoakustisch maskierbaren Störenergie als Funktion der Frequenz für das Kurzzeitspektrum des Audiosignals, wobei die psychoakustisch maskierbare Störenergie kleiner oder gleich der psychoakustischen Maskierungsschwelle des Kurzzeitspektrums ist;

Gewichten (36) des spektralen gespreizten Informationssignals unter Verwendung der ermittelten Störenergie, um ein gewichtetes Informationssignal zu erzeugen, bei dem die Energie der eingebrachten Informationen im wesentlichen gleich oder unterhalb der psychoakustischen Maskierungsschwelle liegt;

Summieren (38) des gewichteten Informationssignals mit den Spektralwerten des Kurzzeitspektrums des Audiosignals, um Summen-Spektralwerte zu erhalten, die das Kurzzeitspektrum des Audiosignals und die Informationen umfassen; und

Verarbeiten (22, 24, 26) der Summen-Spektralwerte, um einen verarbeiteten Datenstrom zu erhalten, der die Daten über die Spektralwerte des Kurzzeitspektrums des Audiosignals und die einzubringenden Informationen umfaßt.

2.    Verfahren nach Anspruch 1, bei dem der Datenstrom als Daten über Spektralwerte quantisierte Spektralwerte enthält, wobei der Schritt des Verarbeitens des Datenstroms folgenden Teilschritt aufweist:

inverses Quantisieren (18) der quantisierten Spektralwerte, um die Spektralwerte zu erhalten; und

bei dem der Schritt des Verarbeitens der Summen-Spektralwerte folgende Schritte aufweist:

Quantisieren (22) der Summen-Spektralwerte, um quantisierte Summen-Spektralwerte zu erhalten; und

Bilden (26) des verarbeiteten Datenstroms unter Verwendung der quantisierten Summen-Spektralwerte.

3.    Verfahren nach Anspruch 2, bei dem die quantisierten Spektralwerte im Datenstrom Entropie-codiert sind, wobei der Schritt des Verarbeitens des Datenstroms folgenden Teilschritt aufweist:

Entropie-Decodieren (18) der Entropie-codierten Spektralwerte, um die quantisierten Spektralwerte zu erhalten; und

bei dem der Schritt des Verarbeitens der Summen-Spektralwerte folgenden Schritt aufweist:

Entropie-Codieren (24) der quantisierten Summen-Spektralwerte.

4. Verfahren nach einem der vorhergehenden Ansprüche, bei dem der Schritt des Ermittelns der psychoakustisch maskierbaren Störenergie folgenden Schritt aufweist:

Berechnen (40a) der psychoakustischen Maskierungsschwelle als Funktion der Frequenz unter Verwendung eines psychoakustischen Modells, das basierend auf den Spektralwerten des Audiosignals arbeitet.

5. verfahren nach einem der Ansprüche 1 bis 3, bei dem im Datenstrom als Seiteninformationen eine beim Erzeugen des Datenstroms verwendete Maskierungsschwelle als Funktion der Frequenz für das Kurzzeitspektrum vorhanden ist, wobei der Schritt des Ermittelns folgenden Schritt aufweist:

Extrahieren (40b) der psychoakustischen Maskierungsschwelle aus dem Datenstrom, wobei die psychoakustisch maskierbare Störenergie gleich der psychoakustischen Maskierungsschwelle ist.

6. Verfahren nach einem der Ansprüche 1 bis 3, bei dem der Datenstrom ferner Seiteninformationen aufweist, die Skalenfaktoren (14) beinhalten, mit denen die Spektralwerte vor dem Quantisieren in einem Audiocodierer gruppenweise multipliziert wurden, wobei der Schritt des Verarbeitens des Datenstroms ferner folgenden Teilschritt aufweist:

Extrahieren der Skalenfaktoren aus dem Datenstrom; und

bei dem der Schritt des Ermittelns folgenden Schritt aufweist:

Berechnen der beim Quantisieren im Audiocodierer eingeführten Störenergie als Funktion der Frequenz unter Verwendung der Skalenfaktoren für das Kurzzeitspektrum und unter Verwendung der Spektralwerte sowie unter Kenntnis eines im Audiocodierer verwendeten Quantisierers, wobei die eingebrachte Störenergie ein Maß für die psychoakustisch maskierbare Störenergie ist, die beim Gewichten verwendet wird.

7. Verfahren nach Anspruch 6, bei dem der Datenstrom gemäß ISO/IEC 13818-7 (MPEG-2 AAC) ausgebildet ist, und bei dem der Schritt des Schätzens der Störenergie folgende Schritte aufweist:

Ermitteln eines Quantisierungsschritts für die Spektralwerte aus einem Skalenfaktorband unter Verwendung des diesem Skalenfaktorband zugeordneten Skalenfaktors;

Auswerten der folgenden Gleichung, um die durch die Quantisierung eingeführte Störenergie für das Skalenfaktorband zu erhalten,

$$xmin = \sum_i [(2^{3/8 \cdot QS})/(27/4) \cdot x_i^{1/2}]$$

wobei $x_i$ die i-te Spektrallinie in einem Skalenfaktorband darstellt, wobei QS der Quantisierungsschritt für dieses Skalenfaktorband ist, und wobei xmin die durch die Quantisierung in das Skalenfaktorband eingeführte Störenergie ist;
und bei dem der Schritt des Gewichtens (36) folgenden Schritt aufweist:

Einstellen der Spektralwerte der spektralen Darstellung des gespreizten Informationssignals in dem Skalenfaktorband so, daß die Gesamtenergie der eingestellten Spektralwerte gleich der im Schritt des Auswertens erhaltenen Störenergie in diesem Skalenfaktorband ist.

8. Verfahren nach einem der Ansprüche 1 bis 3, bei dem die Spektralwerte des Datenstroms derart quantisiert sind, daß die durch die Quantisierung eingeführte Störenergie um einen vorbestimmten Betrag kleiner als die psychoakustische Maskierungsschwelle ist, und bei dem im Schritt des Ermittelns (40d) eine Energie bestimmt wird, die dem vorbestimmten Betrag entspricht; und
bei dem im Schritt des Gewichtens (36) die Spektralwerte der spektralen Darstellung des gespreizten Informationssignals derart eingestellt werden, daß sie eine Energie haben, die dem vorbestimmten Betrag entspricht.

9. Verfahren nach Anspruch 8, bei dem der Wert des vorbestimmten Betrags als Seiteninformationen in dem Datenstrom vorhanden ist, wobei im Schritt des Ermittelns (40d) der Wert für den vorbestimmten Betrag aus den Seiteninformationen des Datenstroms extrahiert wird.

10. Verfahren nach einem der vorhergehenden Ansprüche, bei dem im Schritt des Verarbeitens der Summen-Spektralwerte die gleichen Quantisierungsschrittweiten wie im ursprünglichen Datenstrom verwendet werden.

11. Verfahren zum Codieren eines Audiosignals, mit folgenden Schritten:

Erzeugen (50) eines Kurzzeitspektrums des Audiosignals, das eine Mehrzahl von Spektralwerten umfaßt;

Berechnen der psychoakustischen Maskierungsschwelle des Audiosignals unter Verwendung eines psychoakustischen Modells (58);

Quantisieren der Spektralwerte unter Berücksichtigung der psychoakustischen Maskierungsschwelle, so daß die durch die Quantisierung eingeführte Störenergie um einen vorbestimmten Betrag kleiner als die psychoakustische Maskierungsschwelle ist;

Bilden (56) eines Bitstroms, der Werte enthält, die den quantisierten Spektralwerten des Kurzzeitspektrums entsprechen.

12. Verfahren nach Anspruch 11, bei dem im Schritt des Bildens ferner eine Anzeige für den Wert (62) des vorbestimmten Betrags in den Bitstrom aufgenommen wird.

13. Vorrichtung zum Einbringen von Informationen in einen Datenstrom, der Daten über Spektralwerte aufweist, die ein Kurzzeitspektrum eines Audiosignals darstellen, mit folgenden Merkmalen:

einer Einrichtung zum Verarbeiten (10, 16, 18) des Datenstroms, um die Spektralwerte des Kurzzeitspektrums des Audiosignals zu erhalten;

einer Einrichtung zum Beaufschlagen (32) der Informationen mit einer Spreizsequenz, um ein gespreiztes Informationssignal zu erhalten;

einer Einrichtung zum Erzeugen (34) einer Spektraldarstellung des gespreizten Informationssignals, um ein spektrales gespreiztes Informationssignal zu erhalten;

einer Einrichtung zum Ermitteln (40a; 40b; 40c; 40d) einer psychoakustisch maskierbaren Störenergie als Funktion der Frequenz für das Kurzzeitspektrum des Audiosignals, wobei die psychoakustisch maskierbare Störenergie kleiner oder gleich der psychoakustischen Maskierungsschwelle des Kurzzeitspektrums ist;

einer Einrichtung zum Gewichten (36) des spektralen gespreizten Informationssignals unter Verwendung der ermittelten Störenergie, um ein gewichtetes Informationssignal zu erzeugen, bei dem die Energie der eingebrachten Informationen im wesentlichen gleich oder unterhalb der psychoakustischen Maskierungsschwelle liegt;

einer Einrichtung zum Summieren (38) des gewichteten Informationssignals mit den Spektralwerten des Kurzzeitspektrums des Audiosignals, um Summen-Spektralwerte zu erhalten, die das Kurzzeitspektrum des Audiosignals und die Informationen umfassen; und

einer Einrichtung zum Verarbeiten (22, 24, 26) der Summen-Spektralwerte, um einen verarbeiteten Datenstrom zu erhalten, der die Daten über die Spektralwerte des Xurzzeitspektrums des Audiosignals und die einzubringenden Informationen umfaßt.

14. Vorrichtung zum Codieren eines Audiosignals, mit folgenden Merkmalen:

einer Einrichtung zum Erzeugen (50) eines Kurzzeitspektrums des Audiosignals, das eine Mehrzahl von Spektralwerten umfaßt;

einer Einrichtung zum Berechnen der psychoakustischen Maskierungsschwelle des Audiosignals unter Verwendung eines psychoakustischen Modells (58);

einer Einrichtung zum Quantisieren der Spektralwerte unter Berücksichtigung der psychoakustischen Maskierungsschwelle, so daß die durch die Quantisierung eingeführte Störenergie um einen vorbestimmten Betrag kleiner als die psychoakustische Maskierungsschwelle ist;

einer Einrichtung zum Bilden (56) eines Bitstroms, der Werte enthält, die den quantisierten Spektralwerten des Kurzzeitspektrums entsprechen.

## Claims

1.  Method for introducing information into a data stream including data about spectral values representing a short-term spectrum of an audio signal, including:

    processing (10, 16, 18) the data stream to obtain the spectral values of the short-term spectrum of the audio signal;

    combining (32) the information with a spread sequence to obtain a spread information signal;

    generating (34) a spectral representation of the spread information signal to obtain a spectral spread information signal;

    establishing (40a; 40b; 40c; 40d) psychoacoustic maskable noise energy as a function of the frequency for the short-term spectrum of the audio signal, wherein the psychoacoustic maskable noise energy is smaller or the same as the psychoacoustic masking threshold of the short-term spectrum;

    weighting (36) the spectral spread information signal by using the established noise energy to generate a weighted information signal, wherein the energy of the introduced information is substantially equal to or below the psychoacoustic masking threshold;

    summing (38) the weighted information signal with the spectral values of the short-term spectrum of the audio signal to obtain sum spectral values including the short-term spectrum of the audio signal and the information; and

    processing (22, 24, 26) the sum spectral values to obtain a processed data stream including the data about the spectral values of the short-term spectrum of the audio signal and the information to be introduced.

2.  Method according to claim 1, wherein the data stream comprises quantized spectral values as data about spectral values, the step of processing the data stream including the following sub-step:

    inverse quantizing (18) the quantized spectral values to obtain the spectral values; and

    with the step of processing the summed spectral values including:

    quantizing (22) the summed spectral values to obtain quantized summed spectral values; and

    forming (26) the processed data stream using the quantized summed spectral values.

3.  Method according to claim 2 wherein the quantized spectral values in the data stream are entropy-encoded, with the step of processing the data stream including the following sub-step:

    entropy-decoding (18) the entropy-encoded spectral values to obtain the quantized spectral values; and the step of processing the summed spectral values including:

entropy-encoding (24) the quantized summed spectral values.

4. Method according to one of the previous claims, wherein the step of establishing the psychoacoustic maskable noise energy comprises:

  computing (40a) the psychoacoustic masking threshold as function of frequency using a psychoacoustic model, which is based on the spectral values of the audio signal.

5. Method according to one of the claims 1 to 3, wherein a masking threshold used in generating the data stream as function of frequency for the short-term spectrum is present in the data stream as side information, the step of establishing including:

  extracting (40b) the psychoacoustic masking threshold from the data stream, wherein the psychoacoustic maskable noise energy is the same as the psychoacoustic masking threshold.

6. Method according to one of the claims 1 to 3, wherein the data stream further comprises side information including scale factors (14) by which the spectral values will be multiplied in groups in an audio encoder prior to quantizing, the step of processing the data stream further including the following sub-step:

  extracting the scale factors from the data stream; and
  the step of establishing including:

  computing the noise energy introduced into the audio encoder when quantizing as function of frequency by using the scale factors for the short-term spectrum and by using the spectral values as well as knowing a quantizer used in the audio encoder, the introduced noise energy being a measure for the psychoacoustic maskable noise energy used in weighting.

7. Method according to claim 6, wherein the data stream is formed according to ISO/IEC 13818-7 (MPEG-2 AAC) and the step of estimating the noise energy comprises:

  establishing a quantizing step for the spectral values from a scale factor band using the scale factor associated with this scale factor band;

  evaluating the following formula to obtain the noise energy for the scale factor band introduced by quantizing,

$$x\ min\ =\ \sum_{i} [\,(2^{3\,/\,8 \cdot QS})\,/\,(27\,/\,4) \cdot x_i^{\,1\,/\,2}]$$

wherein $x_i$ is the i-th spectral line in a scale factor band, QS is the quantizing step for this scale factor band and xmin is the noise energy introduced in the scale factor band by quantizing;
the step of weighting (36) including:

  setting the spectral values of the spectral representation of the spread information signal in the scale factor band such that the total energy of the set spectral values is the same as the noise energy in this scale factor band obtained in the step of evaluating.

8. Method according to one of the claims 1 to 3, wherein the spectral values of the data stream are quantized such that the noise energy introduced by quantizing is smaller than the psychoacoustic masking threshold by a predetermined amount and wherein, in the step of establishing (40d) an energy corresponding to the predetermined amount is established; and
wherein in the step of weighting (36) the spectral values of the spectral representation of the spread information signal are set such that they have an energy corresponding to the predetermined amount.

9. Method according to claim 1, wherein the value of the predetermined amount is present as side information in the data stream, in the step of establishing (40d) the value for the predetermined amount will be extracted from the side information of the data stream.

**10.** Method according to one of the previous claims, wherein in the step of processing the sum spectral values, the same quantizing step sizes as in the original data stream are used.

**11.** Method for encoding an audio signal, including:

generating (50) a short-term spectrum of the audio signal including a plurality of spectral values;

computing the psychoacoustic masking threshold of the audio signal using a psychoacoustic model (58);

quantizing (52) the spectral values considering the psychoacoustic masking threshold, so that the noise energy introduced by quantizing is smaller than the psychoacoustic masking threshold by a predetermined amount; and

forming (56) a bit stream including values corresponding to the quantized spectral values of the short-term spectrum.

**12.** Method according to claim 11 wherein in the step of forming an indication for the value (62) of the predetermined amount is included in the bit stream.

**13.** Apparatus for introducing information into a data stream including data about spectral values representing a short-term spectrum of an audio signal, including:

means for processing (10, 16, 18) the data stream to obtain the spectral values of the short-term spectrum of the audio signal;

means for combining (32) the information with a spread sequence to obtain a spread information signal;

means for generating (34) a spectral representation of the spread information signal to obtain a spectral spread information signal;

means for establishing (40a; 40b; 40c; 40d) psychoacoustic maskable noise energy as function of the frequency for the short-term spectrum of the audio signal, wherein the psychoacoustic maskable noise energy is smaller than or the same as the psychoacoustic masking threshold of the short-term spectrum;

means for weighting (36) the spectral spread information signal by using the established noise energy to generate a weighted information signal, wherein the energy of the introduced information is substantially equal to or below the psychoacoustic masking threshold;

means for summing (38) the weighted information signal with the spectral values of the short-term spectrum of the audio signal to obtain spectral values including the short-term spectrum of the audio signal and the information; and

means for processing (22, 24, 26) the summed spectral values to obtain a processed data stream including the data about the spectral values of the short-term spectrum of the audio signal and the information to be introduced.

**14.** Apparatus for encoding an audio signal, including:

means for generating (50) a short-term spectrum of the audio signal including a plurality of spectral values;

means for computing a psychoacoustic masking threshold of the audio signal using a psychoacoustic model (58);

means for quantizing spectral values considering the psychoacoustic masking threshold so that noise energy introduced by quantizing is smaller than the psychoacoustic masking threshold by a predetermined amount;

means for forming (56) a bit stream including values corresponding to the quantized spectral values of the short-term spectrum.

**Revendications**

1. Procédé pour l'introduction d'informations dans un flux de données, lequel présente des données relatives à des valeurs spectrales représentant un spectre à court terme d'un signal audio, comprenant les étapes suivantes:

   traitement (10, 16, 18) du flux de données pour obtenir les valeurs spectrales du spectre à court terme du signal audio;

   adjonction (32) d'une séquence d'étalement aux informations pour obtenir un signal d'information étalé;

   production (34) d'une représentation spectrale du signal d'information étalé pour obtenir un signal d'information spectral étalé;

   détection (40a; 40b; 40c; 40d) d'une énergie parasite masquable psychoacoustiquement en tant que fonction de la fréquence, pour le spectre à court terme du signal audio, ladite énergie parasite masquable psychoacoustiquement étant inférieure ou égale au seuil de masquage psychoacoustique du spectre à court terme;

   pondération (36) du signal d'information spectral étalé sous utilisation de l'énergie parasite détectée pour générer un signal d'information pondéré dans lequel l'énergie des informations introduites est sensiblement égale ou inférieure au seuil de masquage psychoacoustique;

   addition (38) du signal d'information pondéré et des valeurs spectrales du spectre à court terme du signal audio pour obtenir des valeurs spectrales obtenues par addition, lesquelles comprennent le spectre à court terme du signal audio et les informations ; et

   traitement (22, 24, 26) desdites valeurs spectrales obtenues par addition pour obtenir un flux de données traité comprenant les données relatives aux valeurs spectrales du spectre à court terme du signal audio et les informations à introduire.

2. Procédé selon la revendication 1, dans lequel le flux de données contient des valeurs spectrales quantisées en tant que données relatives à des valeurs spectrales, l'étape de traitement du flux de données présentant l'étape partielle suivante:

   quantisation inverse (18) des valeurs spectrales quantisées pour obtenir les valeurs spectrales ; et

   dans lequel l'étape de traitement des valeurs spectrales obtenues par addition présente les étapes suivantes:

   quantisation (22) des valeurs spectrales obtenues par addition pour obtenir des valeurs spectrales quantisées obtenues par addition ; et

   formation (26) du flux de données traité sous utilisation des valeurs spectrales quantisées obtenues par addition.

3. Procédé selon la revendication 2, dans lequel les valeurs spectrales quantisées sont codées par entropie dans le flux de données, l'étape de traitement du flux de données présentant l'étape partielle suivante:

   décodage par entropie (18) des valeurs spectrales codées par entropie pour obtenir les valeurs spectrales quantisées ; et
   dans lequel l'étape de traitement des valeurs spectrales obtenues par addition présente l'étape suivante:

   codage par entropie (24) des valeurs spectrales quantisées obtenues par addition.

4. Procédé selon l'une des revendications précédentes, dans lequel l'étape de détection de l'énergie parasite masquable psychoacoustiquement présente l'étape suivante:

calcul (40a) du seuil de masquage psychoacoustique en tant que fonction de la fréquence sous utilisation d'un modèle psychoacoustique opérant sur la base des valeurs spectrales du signal audio.

5. Procédé selon l'une des revendications 1 à 3, dans lequel se trouve, dans le flux de données, en tant qu'informations latérales et pour le spectre à court terme, un seuil de masquage tenant lieu de fonction de la fréquence et utilisé lors de la génération du flux de données, l'étape de détection présentant l'étape suivante:

extraction (40b) du seuil de masquage psychoacoustique hors du flux de données, l'énergie parasite masquable psychoacoustiquement étant égale au seuil de masquage psychoacoustique.

6. Procédé selon l'une des revendications 1 à 3, dans lequel le flux de données présente en outre des informations latérales contenant des facteurs de cadrage (14) par lesquels les valeurs spectrales ont été multipliées en groupes dans un codeur audio avant la quantisation, l'étape de traitement du flux de données présentant par ailleurs l'étape partielle suivante:

extraction des facteurs de cadrage hors du flux de données, et
dans lequel l'étape de détection présente l'étape suivante:

calcul de l'énergie parasite introduite, lors de la quantisation dans le codeur audio, en tant que fonction de la fréquence, sous utilisation des facteurs de cadrage, pour le spectre à court terme, ainsi que sous utilisation des valeurs spectrales et en connaissance d'un quantiseur utilisé dans le codeur audio, l'énergie parasite introduite étant une mesure de l'énergie parasite masquable psychoacoustiquement, laquelle est utilisée lors de la pondération.

7. Procédé selon la revendication 6, dans lequel le flux de données est réalisé selon ISO/IEC 13818-7 (MPEG-2 AAC) et dans lequel l'étape de l'estimation de l'énergie parasite présente les étapes suivantes:

détermination d'une étape de quantisation pour les valeurs spectrales d'une bande de facteur de cadrage sous utilisation du facteur de cadrage affecté à ladite bande de facteur de cadrage;

analyse de l'équation suivante pour obtenir l'énergie parasite introduite par la quantisation pour la bande de facteur de cadrage:

$$x\min = \sum_{i}\left[\left(2^{3/8 \cdot QS}\right)/(27/4)\cdot x_i^{1/2}\right]$$

$x_i$ étant la $i^{ème}$ ligne spectrale dans une bande de facteur de cadrage, QS étant l'étape de quantisation pour ladite bande de facteur de cadrage et xmin étant l'énergie parasite introduite dans la bande de facteur de cadrage par la quantisation,

et dans lequel l'étape de pondération (36) présente l'étape suivante:

réglage, dans la bande de facteur de cadrage, des valeurs spectrales de la représentation spectrale du signal d'information étalé de manière que, dans ladite bande de facteur de cadrage, l'énergie totale des valeurs spectrales réglées est égale à l'énergie parasite obtenue à l'étape de l'analyse.

8. Procédé selon l'une des revendications 1 à 3, dans lequel les valeurs spectrales du flux de données sont quantisées de manière telle que l'énergie parasite introduite par la quantisation est inférieure d'un montant prédéterminé par rapport au seuil de masquage psychoacoustique et dans lequel est définie, à l'étape de détection (40d), une énergie correspondant audit montant prédéterminé ; et
dans lequel, à l'étape de pondération (36), les valeurs spectrales de la représentation spectrale du signal d'information étalé sont réglées de manière telle qu'elles ont une énergie correspondant au montant prédéterminé.

9. Procédé selon la revendication 8, dans lequel la valeur du montant prédéterminé se trouve dans le flux de données en tant qu'informations latérales, la valeur dudit montant prédéterminé étant extraite hors des informations latérales du flux de données à l'étape de détection (40d).

10. Procédé selon l'une des revendications précédentes, dans lequel sont utilisés, à l'étape du traitement des valeurs spectrales obtenues par addition, les mêmes pas de quantisation que dans le flux de données d'origine.

11. Procédé de codage d'un signal audio, comprenant les étapes suivantes:

génération (50) d'un spectre à court terme du signal audio comprenant une pluralité de valeurs spectrales;

calcul du seuil de masquage psychoacoustique du signal audio sous utilisation d'un modèle psychoacoustique (58);

quantisation des valeurs spectrales compte tenu du seuil de masquage psychoacoustique de sorte que l'énergie parasite introduite par la quantisation est inférieure d'un montant prédéterminé par rapport au seuil de masquage psychoacoustique;

formation (56) d'un flux de bits contenant des valeurs correspondant aux valeurs spectrales quantisées du spectre à court terme.

12. Procédé selon la revendication 11, dans lequel le flux de bits admet en outre, à l'étape de la formation, une indication de la valeur (62) du montant prédéterminé.

13. Dispositif pour l'introduction d'informations dans un flux de données, lequel présente des données relatives à des valeurs spectrales représentant un spectre à court terme d'un signal audio, comprenant les caractéristiques suivantes:

un dispositif pour le traitement (10, 16, 18) du flux de données pour obtenir les valeurs spectrales du spectre à court terme du signal audio;

un dispositif pour l'adjonction (32) d'une séquence d'étalement aux informations pour obtenir un signal d'information étalé;

un dispositif pour la production (34) d'une représentation spectrale du signal d'information étalé pour obtenir un signal d'information spectral étalé;

un dispositif pour la détection (40a; 40b; 40c; 40d) d'une énergie parasite masquable psychoacoustiquement en tant que fonction de la fréquence, pour le spectre à court terme du signal audio, ladite énergie parasite masquable psychoacoustiquement étant inférieure ou égale au seuil de masquage psychoacoustique du spectre à court terme;

un dispositif de pondération (36) du signal d'information spectral étalé sous utilisation de l'énergie parasite détectée pour générer un signal d'information pondéré dans lequel l'énergie des informations introduites est sensiblement égale ou inférieure au seuil de masquage psychoacoustique;

un dispositif pour l'addition (38) du signal d'information pondéré et des valeurs spectrales du spectre à court terme du signal audio pour obtenir des valeurs spectrales obtenues par addition, lesquelles comprennent le spectre à court terme du signal audio et les informations ; et

un dispositif pour le traitement (22, 24, 26) desdites valeurs spectrales obtenues par addition pour obtenir un flux de données comprenant les données relatives aux valeurs spectrales du spectre à court terme du signal audio et les informations à introduire.

14. Dispositif pour le codage d'un signal audio, comprenant les caractéristiques suivantes:

un dispositif pour générer (50) un spectre à court terme du signal audio comprenant une pluralité de valeurs spectrales;

un dispositif pour le calcul du seuil de marquage psychoacoustique du signal audio sous utilisation d'un modèle psychoacoustique (58);

un dispositif pour la quantisation des valeurs spectrales compte tenu du seuil de masquage psychoacoustique de sorte que l'énergie parasite introduite par la quantisation est inférieure d'un montant prédéterminé par rapport au seuil de masquage psychoacoustique;

un dispositif pour la formation (56) d'un flux de bits contenant des valeurs correspondant aux valeurs spectrales quantisées du spectre à court terme.

Spektralwerte

10    12    16    18         20         22    24    26

DEMUX | Entropie-Decoder | inverser Quantisierer | Wasserzeichen Einrichtung | Quant. | Cod. | MUX

14

Skalenfaktoren

## Fig. 1

38

Spektralwerte                    Summen-Spektralwerte

Summieren

Ermitteln der maskierbaren Störenergie | Gewichten | 36

40

Transformieren | 34

vom DEMUX

Spreiz-sequenz | Spreizen | 32

Quelle für Information | 30

## Fig. 2

Spektralwerte

40a — psychoakustisches Modell → psychoakustische Maskierungsschwelle

## Fig. 3a

40b — Extrahieren der psychoakustischen MS aus Datenstrom (Seiteninformation) → psychoakustische Maskierungsschwelle

**vom** DEMUX

## Fig. 3b

Spektralwerte

40c — Berechnen der vom Codierer einge- brachten Störenergie → Störenergie durch Quantisieren

**vom** DEMUX — Skalenfaktoren

## Fig. 3c

Spektralwerte

40d — Berechnen der Störenergie unter Berücksicht. des vorbest. Betrags → vorbestimmter Betrag

Wert des Betrags

**vom** DEMUX — Skalenfaktoren

## Fig. 3d

Fig. 4